# EUROPÄISCHE PATENTANMELDUNG

(11) **EP 1 933 453 A2**
(43) Veröffentlichungstag der Anmeldung: **18.06.2008**
(21) Anmeldenummer: 07024329.0
(22) Anmeldetag: 14.12.2007
(51) Int. Cl.: H02P 8/38

(54) **Verfahren zur Steuerung eines Schrittmotors**

(30) Priorität: 14.12.2006 DE 102006059048
(71) Anmelder: WILO AG, 44263 Dortmund (DE)
(72) Erfinder: Bouet, Julien, 45360 Chatillon Sur Loire (FR); Stroobant, Philippe, 18410 Argent Sur Sauldre (FR)
(74) Vertreter: COHAUSZ DAWIDOWICZ HANNIG & SOZIEN

(57) **Zusammenfassung**

Die Erfindung betrifft ein Verfahren zur Steuerung eines Schrittmotors, bei dem in wenigstens einer der zur Durchführung eines Schrittes bestromten Spulen (L1, L2) nach Abschalten des Stromes die rückinduzierte Spannung (Vz) gemessen wird, wobei aus einem Spannungsanstieg in der rückinduzierten Spannung (Vz) gegenüber einer bei wenigstens einem, insbesondere mehreren vorherigen Schritten detektierten sukzessiven Spannungsverringerung auf einen Rücksprung (R) des Schrittmotors aufgrund einer Blockade (B) geschlossen wird.

## Beschreibung

Die Erfindung betrifft ein Verfahren zur Steuerung eines Schrittmotors.

Schrittmotoren sind im Stand der Technik in vielfältiger Ausführung bekannt. Schrittmotoren sind dabei im Wesentlichen ausgebildet als eine Anordnung einer Vielzahl von Spulenpaaren, die um einen Motor herum kreisförmig angeordnet sind. Durch die definierte Bestromung eines Spulenpaares (z.B. im Vollschrittbetrieb) bzw. mehrerer Spulenpaare (im Halbschrittbetrieb) kann ein Stator in eine Vielzahl verschiedener stabiler Positionen gebracht werden.

Die Anzahl der stabilen Positionen hängt hierbei im Wesentlichen nur davon ab, wie viele Spulenpaare statorseitig vorgesehen sind. Hierbei ist es bei der Ansteuerung eines Schrittmotors durch eine hierfür vorgesehene Ansteuerungselektronik üblicherweise vorgesehen, mit jedem durchzuführenden Schritt, bezogen auf ein bislang bestromtes Spulenpaare, das in der gewünschten Drehrichtung nachfolgende Spulenpaar zu bestromen, wobei unter einem Spulenpaar jeweils zwei in der kreisförmigen Spulenanordnung diametral gegenüberliegende Spulen verstanden werden. Diese beiden, einander diametral gegenüberliegenden Spulenpaare bilden somit eine Nordsüdausrichtung eines durch die Bestromung erzeugten magnetischen Feldes, aufgrund dessen Existenz sich ein dazwischen angeordneter Rotor mit seinem Permanentmagneten entsprechend ausrichtet.

Schrittmotoren finden ihren Einsatz bei einer Vielzahl von Anwendungen, bei denen bewegte Elemente um vordefinierte Winkelbeträge gedreht oder um vordefinierte Hubschritte translatiert werden sollen. Für letzteres kann die Drehbewegung eines Schrittmotors beispielsweise durch eine Gewindespindel in eine translatorische Bewegung umgesetzt werden. Die Winkelschrittweite bzw. die Hubschrittweite sind somit wie eingangs erwähnt durch die Anzahl der Spulenpaare definiert, so dass durch diese Anzahl die Auflösung der Bewegungsweite bestimmen lässt.

Bei einer Vielzahl von Anwendungen kann das Problem auftreten, dass die Anzahl der möglichen Schritte, die ein zu bewegendes Element in einer umgebenden Anordnung durchführen kann, nicht immer bekannt ist. Beispielsweise kann es sodann passieren, wenn ein Schrittmotor kontinuierlich angesteuert wird und Schritt für Schritt weiter dreht, dass ein hierdurch bewegtes Element in einen Anschlag läuft. Dies führt je nachdem, ob es sich um einen harten oder weichen Anschlag handelt, mehr oder weniger abrupt oder innerhalb von wenigen Schritten des Schrittmotors zu einer Blockade des Schrittmotors, was bedeutet, dass mit einer fortschreitenden Ansteuerung des Schrittmotors, d.h. einer kontinuierlich weiterschreitenden Bestromung aufeinander folgender Spulenpaare der blockierte Rotor des Schrittmotors nicht mehr mit dem sich weiter bewegenden magnetischen Feld mitbewegt werden kann.

Aufgrund der weiteren Bewegung des magnetischen Feldes, jedoch der Tatsache, dass der Rotor durch die von außen wirkende Blockierung festgehalten wird, wandert das magnetische Feld innerhalb des Schrittmotors relativ zum festgehaltenen Rotor weiter, wobei sich mit fortschreitender Ansteuerung irgendwann eine Lage des magnetischen Feldes relativ zum festgehaltenen Rotor ergibt, bei der der Rotor entgegen seiner zuvor beabsichtigten Rotationsrichtung um einen bestimmten Winkelbetrag zurückspringt und somit der Rotor in seiner Ausrichtung wieder dem magnetischen Feld des bestromten bzw. der bestromten Statorspulenpaare folgt.

Nach einem solchen Rücksprung folgt der Rotor bei einer fortwährenden weiteren Schrittansteuerung wiederum dem magnetischen Feld, bis es erneut zu einer Blockade kommt und sich der vorbeschriebene Vorgang gegebenenfalls mehrfach wiederholt.

Aus dem vorbeschriebenen Verhalten eines Schrittmotors resultiert das Problem, dass insbesondere in der Umgebung einer Blockade und hierdurch ausgelöster Rücksprünge ein Schrittmotor bzw. das dadurch bewegte Element eine undefinierte Lage aufweisen kann, wenn in der Umgebung eines solchen Rücksprungs bzw. einer Blockade die Schrittansteuerung des Schrittmotors beendet wird, wodurch gegebenenfalls Fehlersituationen entstehen können.

Eine Anwendung, bei der dieses Problem maßgeblich zutage treten kann, liegt darin, wenn durch Schrittmotoren ein Ventilstellglied eines Ventils zur Absperrung eines Fluiddurchganges verwendet wird. Ein solches Ventilstellglied kann durch den Schrittmotor durch das Drehen einer Spindel Schritt für Schritt in Richtung des Ventilstellglieds voranbewegt werden, wobei bei Erreichen des Ventilsitzes eine Blockade im vorbeschriebenen Sinne entstehen kann.

Oftmals wird die Anordnung in einem Ventil zwischen Ventilstellglied und Ventilsitz derart ausgestaltet sein, dass eine weiche Dichtung realisiert wird, was bedeutet, dass z.B. der Ventilsitz oder das Ventilstellglied mit einem elastomeren Material oder einem ähnlichen nachgiebigen Material ausgestattet ist. Bei einer derartigen Anordnung kommt es nicht abrupt zu einer Blockade, sondern es wird zunächst zu einer Verformung des elastomeren Materials zwischen Ventilsitz und Ventilstellglied kommen, bis dass das Ventilstellglied durch den voranschreitenden Schrittmotor nicht weiter bewegt werden kann.

Werden sodann weitere Schritte beim Schrittmotor ausgeführt, so kann es zu einem Rücksprung des Rotors und damit auch zu einem Zurückbewegen des Ventilstellgliedes gegenüber dem Sitz kommen. Dies kann darin resultieren, dass im schlimmsten Fall die Dichtigkeit zwischen Ventilsitz und Ventilstellglied aufgehoben wird oder aber dass zumindest nicht die maximale oder eine gewünschte Schließkraft erzielt wird, so dass ab bestimmten Drücken in einer Fluidleitung eine Undichtigkeit entstehen kann.

Neben den Problemen bei der vorbeschriebenen Anwendung können ähnlich gelagerte Probleme auch in anderen Anwendungen vorkommen. Aufgabe der Erfindung ist es, ein Verfahren zur Steuerung eines Schrittmotors bereitzustellen, mit welchem eine Blockade eines Schrittmotors sicher erkannt werden kann und welches somit Möglichkeiten bietet, eine definierte gewünschte Endposition eines durch einen Schrittmotor bewegten Elementes, z.B. des Ventilstellgliedes, relativ zum Ventilsitz zu erreichen.

Gelöst wird die Aufgabe dadurch, dass in wenigstens einer der zur Durchführung eines Schrittes bestromten Spulen nach Abschaltung des Stromes die rückinduzierte Spannung gemessen wird, wobei aus einem Spannungsanstieg in der rückinduzierten Spannung gegenüber einem bei wenigstens einem, bevorzugt mehreren vorherigen Schritten detektierten sukzessiven Spannungsverringerung auf einen Rücksprung des Schrittmotors aufgrund einer Blockade geschlossen wird.

Der wesentliche Kerngedanke der Erfindung liegt darin, dass die rückinduzierte Spannung in einem Spulenpaar nach dessen Abschaltung im Anschluss an einen durchgeführten Schritt die Höhe der rückinduzierten Spannung einen Aufschluss darüber geben kann, wie schnell der bewegte Rotor dem Magnetfeld des zuvor bestromten Statorspulenpaars folgen konnte.

Betrachtet man beispielsweise, jedoch nicht in beschränkender Weise die Anwendung bei der Schrittsteuerung eines Ventilstellgliedes mit einem weichen Ventilsitz, so wird hier deutlich, dass mit fortschreitender Ansteuerung des Schrittmotors bei Erreichen einer Anlageposition zwischen Ventilstellglied und Ventilsitz die Kraft, die dem fortschreitend bewegten Rotor entgegengebracht wird, sukzessive zunimmt, bis dass die absolute Blockade erreicht wird und der Rotor nicht mehr weiter bewegt werden kann. Aufgrund dieser wirkenden Gegenkraft wird sowohl die Bewegungsgeschwindigkeit sowie auch die Bewegungsweite des Rotors sukzessive verringert, bis dass bei der absoluten Blockade mit einer weiteren Schrittansteuerung der Rotor nicht mehr weiter bewegt werden kann, also die Geschwindigkeit und die Schrittweite 0 aufweist. So ist demnach beobachtet worden, dass die rückinduzierte Spannung im unbelasteten Fall, also weit ab einer Blockade, im Wesentlichen immer konstant ist, wohingegen in dem Augenblick, wenn ein bewegtes Element in eine Blockade hineinläuft, die rückinduzierte Spannung aufgrund der ansteigenden entgegenwirkenden Kraft sukzessive abnimmt, bis dass bei einem dann erfolgenden Rücksprung, wie er vorangehend beschrieben wurde, ein hoher Spannungspeak in der rückinduzierten Spannung detektiert werden kann, der aufgrund des schnellen und mit einer hohen Bewegungsweite hervorgerufenen Umschlagens bzw. Rückspringens des Rotors resultiert.

So kann aus einem Spannungsanstieg in der rückinduzierten Spannung gegenüber einer bei wenigstens einem, insbesondere mehreren vorherigen Schritten detektieren sukzessiven Spannungsverringerung bei der rückinduzierten Spannung erfindungsgemäß auf einen Rücksprung des Schrittmotors aufgrund einer Blockade geschlossen werden, so dass dieses charakteristische Verhalten bzw. dieser charakteristische Verlauf der rückinduzierten Spannung bei aufeinander folgenden Schrittmotoren ausgenutzt werden, um einen Schrittmotor zu steuern und insbesondere dafür, um einen Schrittmotor bzw. ein damit angetriebenes Element, z.B. ein Ventilsitz eines Ventils, in einer definierten Lage zu stoppen.

In einer bevorzugten Ausführung des erfindungsgemäßen Verfahrens kann es dabei vorgesehen sein, dass eine Ansteuerung des Schrittmotors beendet wird, wenn die gemessene rückinduzierte Spannung einen vorgegebenen Spannungswert erreicht oder unterschreitet. So kann bei dieser Alternative der verfahrensgemäßen Ausgestaltung aufgrund des bei der rückinduzierten Spannung erreichten Spannungsniveaus auf die relative Position eines durch den Schrittmotor bewegten Elementes zur Blockade geschlossen werden. Wie eingangs beschrieben wurde, nimmt in der Umgebung einer Blockade, dann wenn ein Schrittmotor sich durch fortschreitende Schritte auf die Blockade zubewegt, das Spannungsniveau in der rückinduzierten Spannung sukzessive ab, bis dass bei dem erfolgten Rücksprung ein hoher Spannungspeak feststellbar ist.

Es kann demnach vorgesehen sein, dass in einer Ausführung des erfindungsgemäßen Verfahrens die Spannungsniveaus in der rückinduzierten Spannung in der Umgebung einer Blockade ausgemessen und gespeichert werden, so dass bei späteren Schrittansteuerungen des Motors und bei einem Erreichen oder Unterschreiten eines abgespeicherten Spannungsniveaus die Ansteuerung des Schrittmotors beendet wird, da hierdurch der ansteuernden Elektronik bekannt ist, dass der Schrittmotor kurz vor einer Blockade steht.

Durch die Höhe des berücksichtigten vorgegebenen Spannungswertes kann hierbei auch vorgegeben werden, wie weit der Schrittmotor in die Richtung der bevorstehenden Blockade gefahren wird. Je geringer der für den Vergleich vorgesehene Spannungswert gewählt wird, um so näher fährt der Schrittmotor in die Richtung der erwarteten Blockade.

In einer anderen alternativen Ausgestaltung kann es auch vorgesehen sein, dass nach wenigstens einem, in der rückinduzierten Spannung detektierten, durch eine Blockierung bedingten Rücksprung des Motors, eine vorgebbare Anzahl von n Schritten ausgeführt wird und dass nach der Ausführung dieser n Schritte die Ansteuerung des Schrittmotors beendet wird. Hierbei wird bevorzugt die Anzahl von n Schritten derart gewählt, dass n kleiner ist als die maximale Anzahl von möglichen Schritten, bis dass der Schrittmotor von einer detektierten Blockade wiederum in die nächste Blockade nach einem erfolgten Rücksprung hineinfährt.

Auch so wird erreicht, dass ein Schrittmotor eine definierte Position erreicht, wobei durch die Anzahl der nach einem Rücksprung durchgeführten n Schritte festgelegt werden kann, wie weit der Motor wieder in die Richtung der Blockade vorgefahren wird.

Beide Verfahrensvarianten weisen Vorteile z.B. darin auf, dass bei der ersten beschriebenen Verfahrensvariante aus der Höhe der gemessenen Spannung und/oder dem Verlauf aufeinander folgender gemessener Spannungen auf die bei einem Schritt ausgeübte Kraft geschlossen werden kann. Hierbei kann beispielsweise aus der zuletzt gemessenen rückinduzierten Spannung, d.h. der Höhe der gemessenen Spannung, auf eine durch diesen zuletzt ausgeführten Schritt aufgebrachte Kraft geschlossen werden, da diese Spannung eine zur Kraft umgekehrt proportionale Größe bilden kann.

Es besteht so die Möglichkeit, eine Kraftsteuerung eines Schrittmotors zu realisieren, bei der vorgegebene Kräfte, die durch einen mittels des Schrittmotors bewegten Elementes auf ein anderes Element ausgeübt werden sollen. Auch hier ist wieder eine besonders bevorzugte Anwendung auf dem Gebiet der Ventiltechnik zu sehen, bei der es mit einer solchen Ansteuerung vorgesehen sein kann, ein Ventilstellglied mit einer vorbestimmten Kraft in einen Ventilsitz zu pressen.

Bezogen auf die zweite vorbeschriebene Variante kann ebenso aus der Anzahl gezählter Schritte nach einem detektierten Rücksprung auf die bei einem Schritt ausgeübte Kraft geschlossen werden. Dies liegt darin begründet, dass mit jedem weiteren Schritt nach einem detektierten Rücksprung wie eingangs erwähnt die Kraft, die ein mit dem Schrittmotor bewegtes Element auf ein anderes Element ausübt, sich erhöht, bis dass es zum Rücksprung kommt. Auch hier kann somit bei der Anwendung in der Ventiltechnik die Schließkraft des Ventils in vorgegebenen Stufen eingestellt werden.

Um eine maximale Schließkraft zu erzielen, kann es insbesondere bei der ersten verfahrensgemäßen Variante vorgesehen sein, dass der vorgegebene Spannungswert, mit dem ein Vergleich der jeweils gemessenen rückinduzierten Spannung erfolgt, ermittelt wird aus der letzten gemessenen Spannung, nach der bei einer danach folgenden Schrittansteuerung eine höhere Spannung gemessen wird.

So wird sichergestellt, dass es sich bei der dann gemessenen rückinduzierten Spannung um die Spannung handelt, die bei dem letzten Schritt vor einem Rücksprung des Schrittmotors entstanden ist. Wird dieser Spannungswert abgespeichert und für einen Vergleich herangezogen bei zukünftigen Schrittansteuerungen und Messungen der rückinduzierten Spannung, so wird sichergestellt, dass die Schrittansteuerung erst dann beendet wird, wenn die gemessene rückinduzierte Spannung diese abgespeicherte Spannung erreicht oder unterschreitet.

Ist dies der Fall, so ist die maximale Schließkraft erreicht, bevor bei einem nachfolgenden Schritt der Rücksprung erfolgt und sich hierdurch in der Ventilanwendung die Schließkraft signifikant verringert. Auch hier ist jedoch darauf hinzuweisen, dass diese bevorzugte Verfahrensvariante nicht auf den Einsatz bei der Ventiltechnik beschränkt ist, sondern überall dort zum Einsatz kommen kann, wo ein erstes Element relativ zu einem zweiten Element bewegt wird. Sofern nicht eine maximale Kraft zwischen einem durch den Schrittmotor bewegten Element relativ zu einem anderen Element eingestellt werden soll, also beispielsweise keine maximale Schließkraft bei der Anwendung mit einem Ventil, so kann es bevorzugt vorgesehen sein, dass bei der Schrittansteuerung des Schrittmotors eine Folge von Spannungswerten der rückinduzierten Spannung zwischen wenigstens zwei detektierten Rücksprüngen gemessen wird.

Es liegen sodann Messwerte zu allen rückinduzierten Spannungsniveaus vor, die zwischen zwei Rücksprüngen auftreten können, so dass dann der eingangs genannte vorgegebene Spannungswert, der für den Vergleich mit einem jeweils aktuell gemessenen rückinduzierten Spannungswert herangezogen werden kann, ermittelt werden kann aus wenigstens einer der in der Folge gemessenen Spannungswerte.

Bei dieser Art des Vorgehens kann auch eine maximale Zahl m von möglichen Schritten ermittelt werden, die einen Schrittmotor zwischen zwei Rücksprüngen und somit zwischen zwei detektierten Spannungsanstiegen durchführen kann. Diese maximale Zahl m ergibt sich dabei bevorzugt aus der Anzahl der gemessenen rückinduzierten Spannungen, unabhängig von der jeweiligen Höhe, die die Spannungen zwischen zwei detektierten Spannungsanstiegen nach vorherigem Spannungsabfall bzw. den hierdurch detektierten Rücksprüngen aufweisen. Ist eine solche Zahl m ermittelt, so wird es bevorzugt vorgesehen sein, dass bei der zweiten erfindungsgemäßen Ausgestaltung die Anzahl von n durchzuführenden Schritten gewählt ist zu 1 kleiner gleich n kleiner gleich m.

Wie eingangs erwähnt kann das erfindungsgemäße Verfahren bevorzugt eingesetzt werden, um ein Ventilstellglied eines Ventils in definierte Positionen relativ zum Ventilsitz zu fahren und so beispielsweise verschiedene Schließkräfte zu erreichen. Hierbei kann es beispielsweise vorgesehen sein, dass bei einem Schrittmotor, der nach Durchführung von vier Schritten jeweils wieder einen Rücksprung durchführt, sofern er in die Blockade läuft, dass vier verschiedene Schließkräfte bei einem Ventil, welches einen solchen Schrittmotor verwendet, realisiert werden können.

Ein Ausführungsbeispiel der Erfindung ist in den nachfolgenden Figuren dargestellt. Es zeigen:
- Figur 1: mögliche Schließkräfte bzw. mögliche Hübe eines Ventilstellgliedes
- Figur 2: eine Elektronik zur Feststellung der rückinduzierten Spannung
- Figur 3: einen typischen Spannungsverlauf bei der rückinduzierten Spannung
- Figur 4: einen über eine Vielzahl von Schritten beobachteten Spannungsverlauf mit sich in dem Spannungsverlauf abzeichnenden Rücksprüngen des Schrittmotors

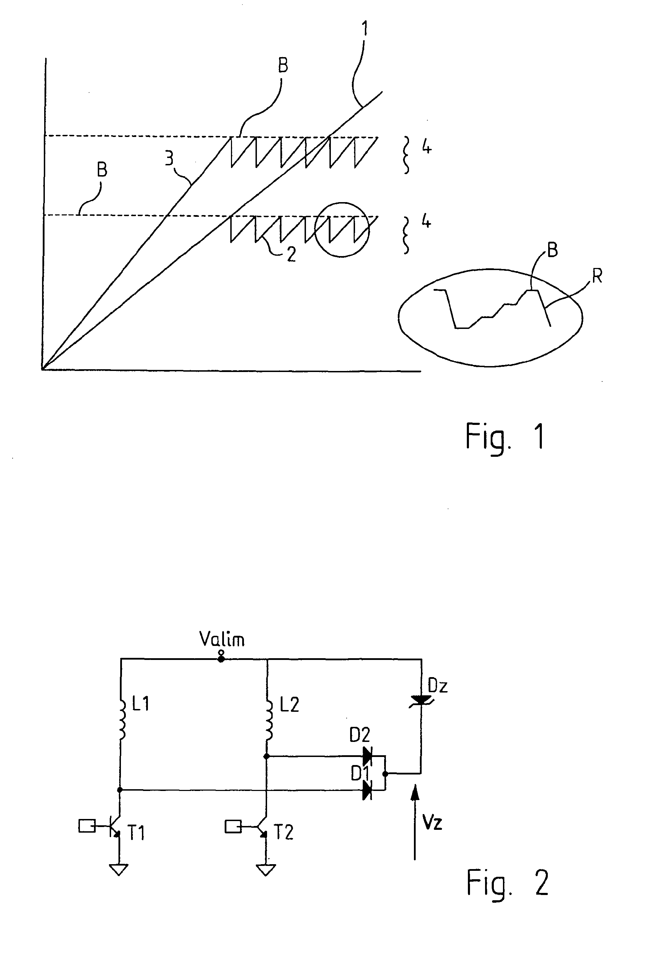

Die Figur 1 zeigt sowohl die mit einem Steppermotor aufbringbare Kraft sowie auch den Hub eines durch den Steppermotor bewegten Elementes, wie z.B. eines Ventilstellgliedes in Abhängigkeit der Schrittanzahl, die auf der X-Achse aufgetragen ist. Erkennbar ist hier, dass ohne Berücksichtigung einer Blockade der Hub 1 eines Schrittmotors mit zunehmender Schrittanzahl ebenso linear zunimmt, so dass der Hub 1 gegenüber der Schrittanzahl eine Gerade 1 in der Figur 1 darstellt.

Kommt es jedoch zu einer Blockade B bei einem bestimmten Hub, so bildet der gegen die Schrittanzahl aufgetragene Hub den hier etwa sägezahnförmigen periodischen Verlauf 2, der daraus resultiert, dass nach Erreichen der Blockade der Schrittmotor einen Rücksprung vollzieht und sodann in dieser Ausführung z.B. vier weitere Schritte gefahren werden können, bis dass wiederum die Blockierung erreicht wird. Hierbei zeigt die Ausschnittvergrößerung des sägezahnförmigen Verlaufs, dass mit jedem Schritt eine bestimmte Hubweite gefahren wird, bis dass nach Erreichen der Blockade B ein Rücksprung R erfolgt.

Das im Wesentlichen gleiche Verhalten ist auch hinsichtlich der Kraft zu detektieren, welche ein bewegtes Element in der Umgebung einer Blockade relativ zu einem anderen Element ausübt, also beispielsweise ein Ventilstellglied relativ zu einem Ventilsitz. Hier werden bei der hier beschriebenen Ausführung vier mögliche Schließkräfte bei einer Ventilanwendung erreicht, bevor es zu einem Rücksprung des Rotors des Schrittmotors kommt und sich die Schließkraft signifikant verringert. Dies zeigt der Kurvenverlauf 3, der in der Umgebung einer Blockade ebenso wie der zuvor beschriebene Hub einen etwa sägezahnförmigen Verlauf mit in diesem Ausführungsbeispiel vier verschiedenen Kraftabstufungen aufweist.

Die Figur 2 zeigt ausschnittsweise eine mögliche elektronische Schaltung, um die rückinduzierte Spannung beobachten zu können. Lediglich exemplarisch und ausschnittsweise werden hier zwei Spulen bzw. Spulenpaare L1 und L2 dargestellt, die an eine gemeinsame Spannungsversorgung angeschlossen sind und deren Bestromung in Abhängigkeit der elektronischen Schalter T1 und T2 erfolgt. In dieser Darstellung erfolgt ein Spannungsabgriff über jeweilige Dioden D1 und D2 unterhalb der Spulen L1 und L2, wobei in Reihe zu den beiden Dioden eine Zehnerdiode DZ angeordnet ist, die zwischen den Dioden und der Spannungsversorgung angeordnet ist. Es kann sodann durch den Pfeil markiert die rückinduzierte Spannung VZ in dieser Schaltung abgegriffen und ausgewertet werden. Die hier dargestellte Spannung ist im Wesentlichen identisch aufgebaut für alle anderen Spulen bzw. Spulenpaare, die noch zusätzlich in einem Steppermotor vorgesehen sind. Wie eingangs erwähnt wird hier lediglich ausschnittsweise die Schaltung für nur zwei Spulen bzw. Spulenpaare L1 und L2 dargestellt.

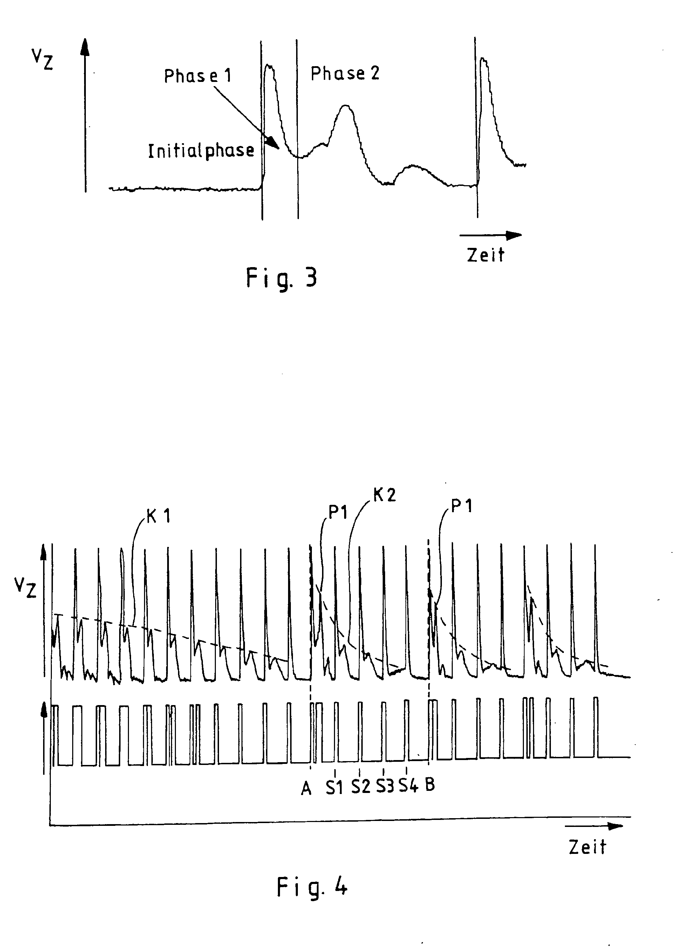

Die Figur 3 verdeutlicht den Verlauf der gemessenen Spannung VZ gegenüber der Zeit. Diese Spannung ist im Wesentlichen abhängig von der rückinduzierten Spannung, so dass diese als auszuwertende Messgröße herangezogen werden kann. Die Figur 3 zeigt dabei eine Unterteilung des mit jedem durchzuführenden Schrittes erzeugten Spannungsverlaufs in insgesamt drei Phasen, eine Initialphase, eine Phase 1 und eine Phase 2. Die Initialphase ergibt sich dadurch, dass ein Spulenpaar kontinuierlich bestromt ist.

Bezogen auf die Figur 2 kann dies z.B. das Spulenpaar L2 sein, so dass sich bei der kontinuierlichen Bestromung zunächst keine rückinduzierte Spannung einstellt und in der Initialphase somit nur ein Spannungsuntergrund mit im Wesentlichen kontinuierlichem konstanten Verlauf gemessen wird. Nach Abschalten des Spulenpaares L2 und Anschalten des Spulenpaares L1 durch ein Schließen des elektronischen Schalters T2 und ein Öffnen des elektronischen Schalters T1 bezogen auf die Figur 2 erfolgt eine Demagnetisierung des Spulenpaares L2, was zu einer rückinduzierten Spannung führt, die in dem Verlauf gemäß Phase 1 und Phase 2 dargestellt wird. In diesem Fall ist die Diode D1 gesperrt und der Strom durch die Spule bzw. das Spulenpaar L2 fließt über die Diode 2 und gegen die Sperrrichtung der Zehnerdiode DZ.

Wird der Strom in der abgeschalteten Phase L2 zu 0, so stellt der hier in der Phase 2 gezeigte Spannungspeak den Anteil der rückinduzierten Spannung dar, der im Wesentlichen auf die Rotorgeschwindigkeit zurückzuführen ist und somit ein Maß für die Last am Rotor darstellt.

Somit zeigt im Wesentlichen in der Phase 1 der Peakverlauf der gemessenen Spannung VZ die abfallende Versorgungsspannung zuzüglich des Sperrpotentials der Zehnerdiode, d.h. es gilt hier VZ ist gleich Vₐₗᵢₘ + V_{DZ}, wohingegen in der Phase 2 aufgrund der zwischenzeitlich abgeschalteten Versorgungsspannung unter Berücksichtigung des Sperrpotentials der Zehnerdiode nur noch die rückinduzierte Spannung, die in der Spule vorherrscht, angezeigt wird, d.h. es gilt hier: V_{z} ist gleich Vₐₗᵢₘ + V_{L2} + 0,6 Volt, soweit in diesem Beispiel das Sperrpotential der Zehnerdiode 0,6 Volt beträgt.

Dieser typische Spannungsverlauf wiederholt sich mit jedem durchgeführt Schritt des Steppermotors, wobei in der Umgebung einer Blockade, so wie es die Figur 4 zeigt, der Spannungspeak der in der Phase 2 zu messen ist, d.h. hier im Wesentlichen der zweite Spannungspeak nach der abfallenden Steuerspannung ein von Schritt zu Schritt abfallendes Spannungsniveau zeigt, sofern der Steppermotor auf die Blockade zufährt.

Dies wird besonders deutlich in dem Bereich der Figur 4 vor der Stelle A, wo anhand des Kurvenverlaufs K1 erkennbar ist, dass die rückinduzierte Spannung mit jedem Schritt sukzessive abnimmt. Erst an der Stelle A erfolgt hier ein Rücksprung des Rotors im Steppermotor aufgrund der erfolgten Blockade, so dass hier bezogen auf die zuvor beschriebene Phase 2 ein besonders signifikanter Spannungspeak P1 messbar ist in der rückinduzierten Spannung, der deutlich höher liegt als das Spannungsniveau im letzten zuvor gemessenen Schritt gemäß der Kurve K1, so dass aufgrund dieser Messung der deutlich erhöhten rückinduzierten Spannung auf eine Blockade und auf einen Rücksprung des Rotors im Steppermotor beschlossen werden kann.

Wird zwischen den Bereichen A und B die Ansteuerung des Steppermotors fortgeführt, so ist hier erkennbar, dass gemäß dem Kurvenverlauf K2 erneut die gemessene rückinduzierte Spannung sukzessive abnimmt, bis dass an der Stelle B wiederum der signifikante Spannungsanstieg des Peaks P1 feststellbar ist in der Kurvenform der gemessenen rückinduzierten Spannung, was darauf schließen lässt, dass am Punkt B wiederum ein Rücksprung des Rotors im Steppermotor stattgefunden hat. Diese Messung lässt sich beliebig fortführen wie die Figur 4 zeigt, wobei hier feststellbar ist, dass zwischen zwei Rücksprüngen, angezeigt durch die Peaks P1 in den jeweiligen Kurvenformen insgesamt vier Schritte S1 bis S4 durchgeführt werden können, bis dass es periodisch zu Blockierungen kommt.

Es kann somit hier für eine Schrittmotorsteuerung sowohl das jeweils gemessene Spannungsniveau der in den hier als Phase 2 bezeichneten Spannungspeaks herangezogen werden kann oder aber auch eine Anzahl von n Schritten nach einem Rücksprung durchgeführt werden kann, wobei n kleiner als m ist mit der Randbedingung, dass m in diesem Beispiel gleich 4 ist. Es ergibt sich so die Möglichkeit, bei Fortführung von ein bis vier Schritten nach dem Rücksprung, wie er beispielsweise in der Position A in der Figur 4 festgestellt wurde, vier verschiedene sukzessive ansteigende Schließkräfte zwischen einem Ventilsitz und einem Ventilstellglied einzustellen. Ebenso besteht die Möglichkeit, den Spannungsverlauf bei der Ansteuerung eines Schrittmotors zu beobachten, d.h. hier insbesondere die rückinduzierten Spannungen zu messen und mit einem vorgegebenen Spannungswert zu vergleichen.

Dieser Spannungswert kann einer derjenigen Spannungsniveaus entsprechen, die bei einer Kurve K1 bzw. K2, d.h. hier insbesondere zwischen zwei Rücksprüngen bei den jeweils gemessenen rückinduzierten Spannungen ermittelt und gespeichert wurden. So kann bei Messung der rückinduzierten Spannungen die Ansteuerung des Schrittmotors dann unterbrochen werden, wenn ein bestimmter vorgegebener abgespeicherter Spannungswert erreicht oder unterschritten wird, wobei mit der Höhe des zu erreichenden bzw. unterschreitenden Spannungswertes die Schließkraft vorbestimmt werden kann.

Gemäß der Erfindung besteht die Möglichkeit, schon bereits vor einem durchgeführten Rücksprung, wie beispielsweise in der Position A die Ansteuerung eines Schrittmotors zu beenden, beispielsweise wenn, wie hier in der Kurvenform K1 zu beobachten ist, das Spannungsniveau des rückinduzierten Spannungspulses der Phase 2 ein bestimmtes, vorgegebenes Spannungsniveau unterschreitet, nämlich beispielsweise hier das Spannungsniveau, welches sich bei dem vorletzten gemessenen Spannungspeak der Phase 2 vor der Position A ergibt.

Bezüglich sämtlicher Ausführungen ist festzustellen, dass die in Verbindung mit einer Ausführung genannten technischen Merkmale nicht nur bei der spezifischen Ausführung eingesetzt werden können, sondern auch bei den jeweils anderen Ausführungen. Sämtliche offenbarten technischen Merkmale dieser Erfindungsbeschreibung sind als erfindungswesentlich einzustufen und beliebig miteinander kombinierbar oder in Alleinstellung einsetzbar.

## Patentansprüche

1. Verfahren zur Steuerung eines Schrittmotors, **dadurch gekennzeichnet, dass** in wenigstens einer der zur Durchführung eines Schrittes bestromten Spulen (L1, L2) nach Abschalten des Stromes die rückinduzierte Spannung (Vz) gemessen wird, wobei aus einem Spannungsanstieg in der rückinduzierten Spannung (Vz) gegenüber einer bei wenigstens einem, insbesondere mehreren vorherigen Schritten detektierten sukzessiven Spannungsverringerung auf einen Rücksprung (R) des Schrittmotors aufgrund einer Blockade (B) geschlossen wird.

2. Verfahren nach Anspruch 1, **dadurch gekennzeichnet, dass** eine Ansteuerung des Schrittmotors beendet wird entweder, wenn
a. die gemessene rückinduzierte Spannung (Vz) einen vorgegebenen Spannungswert erreicht oder unterschreitet oder wenn
b. nach wenigstens einem in der rückinduzierten Spannung detektierten durch eine Blockierung (B) bedingten Rücksprung (R) des Motors eine vorgebbare Anzahl von n Schritten ausgeführt wurde.

3. Verfahren nach einem der vorherigen Ansprüche, **dadurch gekennzeichnet, dass** aus der Höhe der gemessenen Spannung (Vz) und/oder dem Verlauf (K1, K2) aufeinander folgender gemessener Spannungen auf die bei einem Schritt ausgeübte Kraft geschlossen wird, insbesondere wobei die letzte gemessene Spannung eine zur aufgebrachten Kraft umgekehrt proportionale Größe bildet.

4. Verfahren nach Anspruch 1, **dadurch gekennzeichnet, dass** aus der Anzahl gezählter Schritte nach einem detektierten Rücksprung ( R) auf die bei einem Schritt ausgeübte Kraft geschlossen wird.

5. Verfahren nach einem der vorherigen Ansprüche, **dadurch gekennzeichnet, dass** der vorgegebene Spannungswert ermittelt wird aus der letzten gemessenen Spannung nach der bei einer danach folgenden Schrittansteuerung eine höhere Spannung gemessen wird.

6. Verfahren nach einem der vorherigen Ansprüche, **dadurch gekennzeichnet, dass** bei Schrittansteuerung des Schrittmotors eine Folge (K2) von Spannungswerten (Vz) zwischen wenigstens zwei detektierten Rücksprüngen (R) gemessen wird, wobei der vorgegebene Spannungswert ermittelt wird aus wenigstens einer der in der Folge (K2) gemessenen Spannungswerte (Vz) .

7. Verfahren nach Anspruch 6, **dadurch gekennzeichnet, dass** eine maximale Zahl m ermittelt wird aus der Anzahl gemessener Spannungen bzw. durchgeführter Schritte zwischen zwei detektierten Spannungsanstiegen (P1, P2) / Rücksprüngen (R).

8. Verfahren nach einem der vorherigen Ansprüche, **dadurch gekennzeichnet, dass** die vorgegebene Zahl n gewählt ist zu 1 <= n <=m.

9. Verwendung des Verfahrens nach einem der vorherigen Ansprüche zur Steuerung eines Schrittmotors, der das Ventilstellglied eines Ventils antreibt.
